Europäisches Patentamt

European Patent Office

Office européen des brevets

(19)

(11) Numéro de publication: **0 010 820**
**B1**

(12) **FASCICULE DE BREVET EUROPEEN**

(45) Date de publication du fascicule du brevet: **06.04.83**

(51) Int. Cl.³: **H 02 B 1/08**

(21) Numéro de dépôt: **79200641.3**

(22) Date de dépôt: **02.11.79**

(54) **Coffret pour matériel électrique.**

(30) Priorité: **03.11.78 BE 191512**

(43) Date de publication de la demande:
**14.05.80 Bulletin 80/10**

(45) Mention de la délivrance du brevet:
**06.04.83 Bulletin 83/14**

(84) Etats contractants désignés:
**AT CH DE FR GB IT LU NL SE**

(56) Documents cités:
**DE - A - 2 338 427**
**FR - A - 2 117 899**

**B.B.C. NACHRICHTEN, vol. 56, no. 6, 1974,
Mannheim (DE)
FRIEDRIC LEGER: "Installations-Unterputz-Kl
einverteilungen in Flachbauweise", pages
226—228.**

(73) Titulaire: **Vynckier Naamloze Vennootschap
Nieuwe Vaart 51
B-9000 Gent (BE)**

(72) Inventeur: **Dellaert, Gaston Charles
Scheldestraat 34
B-9110 St. Amandsberg (BE)**

(74) Mandataire: **De Rycker, Rudolf, Ir. et al,
Vereenigde Octrooibureaux Belgie S.A.
Charlottalei 48
B-2000 Antwerpen (BE)**

Courier Press, Leamington Spa, England.

# Coffret pour matériel électrique

La présente invention est relative à un coffret pour matériel électrique qui comporte un bac rectangulaire ouvert sur un côté, formé par un fond et des parois latérales formant un tout, un cadre intermédiaire quadrangulaire s'adaptant sur le côté ouvert du bac en obturant partiellement l'ouverture de ce bac, et un couvercle qui est monté à charnière sur le cadre intermédiaire.

De tels coffrets sont largement utilisés dans des installations électriques pour enfermer les fusibles ou disjoncteurs automatiques, des mini-pontages, des commutateurs, etc. Lors du montage, on place tout d'abord le bac sur le fond duquel sont alors fixés les composants électriques, par exemple au moyen de supports spéciaux. On relie ensuite les conducteurs électriques, qui pénètrent dans le bac à travers des ouvertures dans la paroi de celui-ci, à ces composants. Ce n'est qu'ensuite qu'on fixe le cadre intermédiaire avec le couvercle sur le bac. Ce cadre intermédiaire obture complètement le côté ouvert du bac, à l'exception de quelques ouvertures à travers lesquelles on peut par exemple réparer des fusibles et actionner des disjoncteurs automatiques et des commutateurs.

De tels coffrets sont quelquefois montés sur une cloison ou un mur. Dans d'autres cas, surtout dans les habitations particulières, il est désirable que le coffret soit encastré soit à moitié, soit complètement.

Avec les coffrets connus, on utilise dans ce but deux types différents. Les coffrets à montage apparent comprennent un bac dont les parois latérales sont planes sur le côté extérieur et sont dirigées perpendiculairement au fond, et dont le cadre intermédiaire avec le couvercle ne fait pas saillie en dehors de ces parois. On obtient de la sorte un bloc attrayant approximativement en forme de rampe. Lorsque l'on doit encastrer un tel coffret dans un mur, il est excessivement difficile d'obtenir une bonne finition autour du coffret. Lorsque par exemple le mur est doté d'un plafonnage, celui-ci s'étend, en fonction de la profondeur d'encastrement du coffret, soit jusque contre les parois latérales du bac, soit contre le cadre intermédiaire. Le raccordement de ce plafonnage avec le coffret est en général difficile à assurer et reste ensuite toujours visible. A cause du séchage de ce plafonnage, il apparaît également des fissures qui seront visibles autour du coffret. Une finition attrayante est encore plus difficile lorsque l'on compte encore placer sur le plafonnage un revêtement tel que par exemple du papier peint ou quand le mur au lieu d'être plafonné est revêtu de carreaux décoratifs.

Ce problème de la finition est exclu avec des coffrets qui sont spécialement destinés à un encastrement. Avec ces coffrets, la périphérie externe du cadre intermédiaire est nettement supérieure à la périphérie externe des parois latérales du bac. Ce dernier est encastré dans le mur. Lorsque la cloison ou le mur est complètement fini, on fixe sur ce bac le cadre ou encadrement qui recouvre les bords de l'ouverture dans laquelle le coffret est encastré et donc également les bords de l'éventuel plafonnage ou revêtement mural. Lorsque l'on doit cependant fixer un tel type de coffret en tant que coffret apparent sur un mur, l'aspect extérieur n'est guère esthétique.

Ceci peut bien être compensé grâce à des pièces auxiliaires particulières que l'on fixe alors sur les parois latérales du bac, de telle sorte qu'à l'aide de ces pièces, la face extérieure du bac se raccorde convenablement aux bords externes du cadre intermédiaire. L'utilisation de ces pièces particulières est cependant onéreuse et prend du temps. Ou bien ces pièces auxiliaires ne sont pas fournies automatiquement avec le coffret et dans ce cas l'on doit déterminer dès la commande du coffret si celui-ci sera destiné à un encastrement ou à un montage apparent, ou bien ces pièces auxiliaires sont automatiquement fournies avec le coffret et dans ce cas elles sont inutiles si le coffret est encastré.

Un coffret de ce genre, comprenant un bac et quatre parois auxiliaires pouvant être assemblées pour former un cadre auxiliaire recouvrant les parois latérales du bac lorsque celui-ci n'est pas totalement encastré, est connu de la demande de brevet allemande n° 23 38 427.

Lorsque ce coffret est monté d'une manière complètement apparente sur un mur, le cadre intermédiaire s'adapte sur le cadre auxiliaire couvrant les parois latérales du bac. Dans les quatre coins, les joints entre les parois auxiliaires demeurent visibles. Il y a également un risque que le cadre auxiliaire se détache du bac, étant donné que les quatre parois sont indépendantes du bac proprement dit et ne sont reliées l'une à l'autre que par un système de clipsage. En plus le montage du cadre auxiliaire autour du bac constitue une perte de temps importante.

Lorsque le coffret est totalement encastré il est en premier lieu différent par rapport à son montage apparent. Lorsqu'en montage apparent les parois latérales du coffret sont doubles à cause de la présence du cadre auxiliaire autour du bac, ces parois sont simples lorsque le coffret est encastré étant donné que le cadre auxiliaire n'est pas utilisé. Ce n'est donc en fait pas le même coffret qui est utilisé aussi bien pour le montage apparent que pour le montage encastré. Pour le montage apparent des parois auxiliaires doivent être commandées, parois qui sont inutilisables lors du montage encastré. En plus, l'encastrement du bac doit se faire d'une manière assez précise. Si le bac est un peu trop profondément encastré, de la matière de revêtement du mur couvrera les bords libres des parois du bac et pourra entrer dans le bac. Si le bac n'est pas assez profondément encastré, le cadre intermédiaire, qui fait saillie de tous côtés au-delà du bord externe libre des parois du bac, ne pourra toucher le revêtement du mur.

Lors du montage semi-encastré, une partie des parois auxiliaires du cadre auxiliaire doit être détachée. Non seulement ce détachement constitue un travail supplémentaire mais il entraîne des risques d'erreur. Si on détache une trop grande partie, le cadre auxiliaire devient en effet inutilisable. En plus pour permettre un détachement facile des parties de parois, ces parois auxiliaires doivent porter des zones d'affaiblissement, ce qui complique leur construction. C'est également afin de pouvoir détacher facilement des parties des parois auxiliaires que ces parois doivent être indépendantes du bac.

Non seulement le but recherché selon la demande de brevet allemande n° 23 38 427 ne serait pas atteint si les parois auxiliaires et les parois du bac Faisaient un tout indivisible, mais une bonne finition ne pourrait être obtenue en cas de montage encastré du coffret.

En effet, le bord externe libre des parois du bac ne fait pas ou fait trop peu saillie au-delà du bord externe libre des parois auxiliaires pour que le revêtement du mur autour du coffret puisse couvrir le bord libre des parois auxiliaires. Comme le cadre intermédiaire ne fait pas saillie sur toute la périphérie du coffret en dehors du cadre auxiliaire la jonction entre le revêtement de mur entourant le cadre auxiliaire et ce cadre restera visible empêchant ainsi une bonne finition. En plus le coffret est conçu de telle manière que le cadre intermédiaire vienne toujours en contact avec les bords externes libres des parois du cadre auxiliaire empêchant également ces bords libres d'être recouverts par le revêtement mural.

L'invention a pour but d'éliminer ces inconvénients et d'offrir un coffret pour matériel électrique qui, sans pièces auxiliaires particulières, convient aussi bien pour être monté dans un mur ou sur un mur, mais également pour être incorporé par vibration dans un mur en béton, tout en permettant d'obtenir dans tous ces cas une finition attrayante.

A cette fin, les parois latérales du bac comportent sur toute la périphérie du bac, du côté ouvert de celui-ci, une partie décalée vers l'intérieur par rapport à la face externe des parois, faisant saillie au-delà du bord externe libre des parois dans une direction s'éloignant du fond sur une distance d'au moins environ 1 cm et formant une pièce avec les parois, le cadre intermédiaire couvrant cette partie sans faire saillie en dehors la face externe des parois latérales et avec ses faces externes dans la continuation des parois latérales du bac, le bord libre du cadre intermédiaire pouvant toucher le bord externe libre des parois en cas de montage apparent du coffret.

Lors d'un montage apparent ou d'un montage semiencastré, on fixe le cadre intermédiaire directement sur le bac, de telle sorte qu'alors sur la face extérieure de ce bac, le cadre intermédiaire peut se raccorder sans discontinuité à la face extérieure des parois latérales du bac. Lorsque l'on encastre complètement le coffret, on veille à ce que la face frontale du mur dans lequel le coffret est encastré, par exemple le revêtement mural, vienne s'appliquer contre la partie décalée précitée, recouvrant ainsi le bord externe libre des parois. Ensuite, on fixe le cadre intermédiaire qui s'étend en dehors de la partie décalée et recouvre donc la jonction du mur avec le bac du coffret. Aussi bien la construction que le montage du coffret est très simple étant donné qu'il ne comporte pas de parois auxiliaires séparées du bac.

Dans une forme de réalisation particulière de l'invention, les parois latérales du bac sont doubles du côté ouvert du bac, la partie de paroi externe formant alors une partie de la face externe des parois latérales et la partie de paroi interne formant la partie décalée précitée.

De préférence, les parois latérales du bac ouvert sont complètement réalisées sous forme double.

Dans cette forme de réalisation, la partie de paroi externe de la paroi latérale peut être endommagée ou déformée, sans que pour autant la protection du matériel électrique ou l'emplacement disponible pour ce matériel en soit diminué. Ce matériel est aussi bien lors du montage apparent du coffret que lors de son montage encastré, protégé par les parties de paroi internes des double parois latérales, parties internes qui conservent leur forme, de telle sorte que rien n'est perceptible de l'éventuel endommagement ou déformation à l'intérieur du coffret. Cet endommagement ou cette déformation peut survenir aisément lors de l'encastrement du coffret, cas dans lequel par exemple, pour maintenir le coffret à sa place, on dispose des coins entre les parois de l'ouverture dans le mur et le coffret.

Selon l'invention pratiquement n'importe quel revêtement mural peut, dans le cas d'un montage encastré du coffret, couvrir le bord extrême libre des parois latérales jusqu'à la partie décalée de ces parois, sans couvrir cette partie décalée. La partie décalée forme un arrêt pour le revêtement en cas d'un montage encastré du coffret. Si le revêtement est appliqué en forme d'une pâte, la partie décalée permet l'application d'une manière facile de cette matière de revêtement sans qu'une partie de cette matière n'entre à l'intérieur du bac.

Dans une forme de réalisation avantageuse de l'invention, le cadre intermédiaire lui-même forme une cuvette avec un fond doté de fenêtres et des parois latérales, dont les bords externes rabattus, peuvent entourer la partie décalée susdite des parois latérales du bac, le fond pouvant être séparé de l'encadrement formé par les parois latérales, des moyens étant prévus pour permettre la fixation séparée du fond et de l'encadrement.

Dans cette forme de réalisation, le fond du cadre intermédiaire peut toujours être monté à la distance désirée du fond du bac même lorsque, par exemple à cause du revêtement mural qui couvre le bord externe libre des parois latérales du bac, le cadre intermédiaire demeure espacé du bac. Il suffit de séparer le fond du cadre intermédiaire des parois latérales et de fixer séparément ce fond et ces parois latérales au bac. Lorsque le bac est encastré un peu en oblique, on peut également de cette manière monter le cadre intermédiaire avec son couvercle de façon correctement dressé. Lors du montage apparent le fond et les parois latérales du cadre intermédiaire ne doivent pas être séparés et le cadre intermédiaire demeure dans son eétat initial comme il a été fourni avec le coffret, c'est-à-dire en formant un tout ce qui limite le nombre des pièces du coffret.

D'autres particularités et avantages de l'invention ressortiront de la description donnée ci-après d'un coffret pour matériel électrique et d'un emballage pour un tel coffret selon l'invention, cette description n'étant donnée qu'à titre d'exemple non limitatif et en se référant aux dessins ci-annexés, dans lesquels:

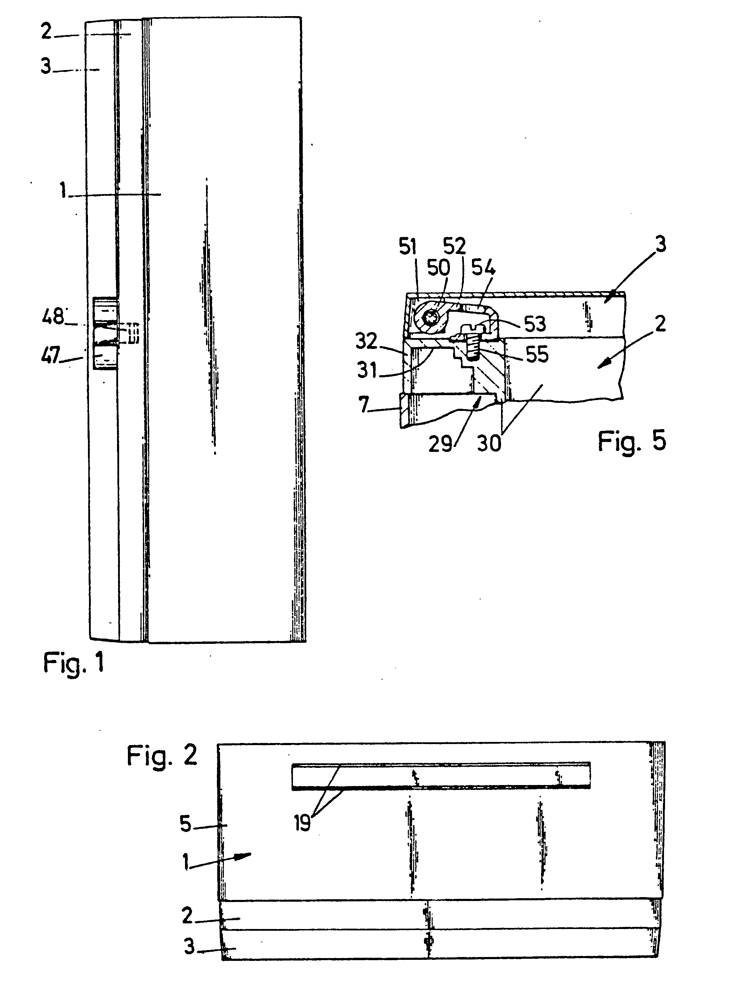

La figure 1 est une vue en élévation latérale d'un coffret pour matériel électrique suivant l'invention.

La figure 2 est une vue en plan du coffret de la figure 1.

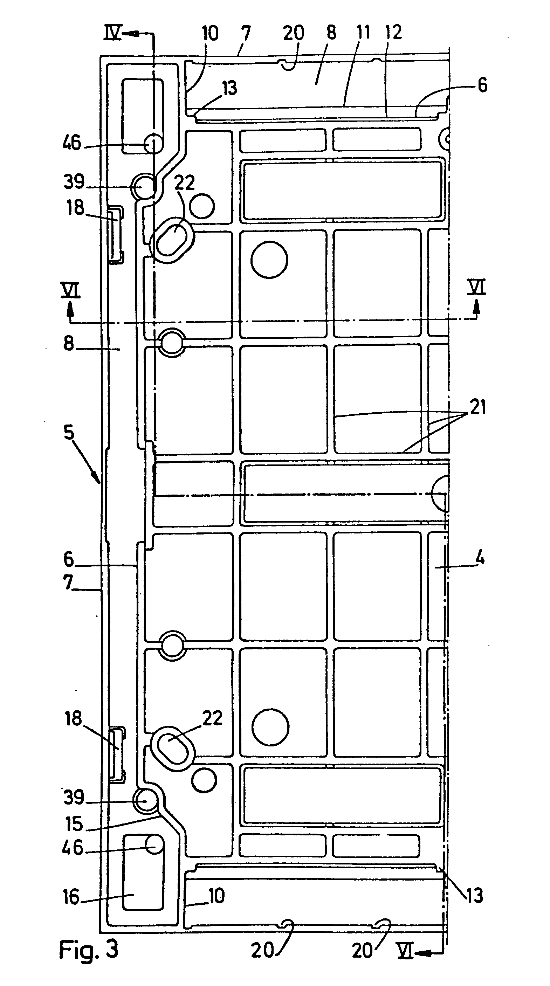

La figure 3 est une vue dorsale de la moitié du coffret des figures précédentes, dessiné à plus grande échelle.

La figure 4 est une vue en coupe suivant la ligne IV—IV de la figure 3, après retournement.

La figure 5 est une vue en coupe suivant la ligne V—V de la figure 4.

La figure 6 est une vue en coupe suivant la ligne VI—VI de la figure 3, après retournement.

La figure 7 est une vue en élévation frontale du coffret des figures précédentes, mais sans le couvercle et à la même échelle que les figures 1 et 2.

La figure 8 est une vue en élévation frontale du coffret des figures précédentes, mais avec le cadre intermédiaire éliminé en plus du couvercle et avec au contraire les supports de matériel électrique représentés à l'intérieur du coffret.

Dans les diverses figures, des chiffres de référence identiques concernent des éléments analogues.

Le coffret pour matériel électrique suivant les figures est de forme rectangulaire et fait de matière synthétique. Il est constitué essentiellement par trois parties, à savoir un bac 1 ouvert sur un côté, un cadre intermédiaire 2 qui s'adapte sur le bac 1 et un couvercle 3 qui est fixé à charnière sur le cadre intermédiaire 2.

Le bac 1 est constitué par un fond 4 qui a la forme d'un rectangle dont les coins sont biseautés et quatre parois latérales 5 s'élevant sur le fond 4 et se raccordant aux bords de celui-ci. Ces parois latérales 5 sont réalisées complètement doubles ou jumelées et sont donc constituées par une partie de paroi interne 6 et une partie de paroi externe 7. Ces parties de paroi 6 et 7 forment donc deux encadrements rectangulaires parmi lesquels l'encadrement interne se raccorde directement au fond 4 et l'encadrement externe est fixé à l'encadrement interne au moyen de rubans de liaison 8, 9 et 10. Les parties de paroi externes 7 des quatre parois latérales 5 s'étendent dans des surfaces planes et sont dirigées perpendiculairement au fond 4. Du côté du fond 4, ces parties de paroi 7 s'étendent cependant jusqu'à un plan théorique qui délimite extérieurement le fond 4. Les parties de paroi internes 6 font brusquement saillie vers l'intérieure à une certaine distance du fond 4, grâce à un gradin 11. En ce qui concerne les parties de paroi 6 des parois latérales longitudinales 5, cette partie faisant saillie vers l'intérieur se raccorde directement au fond 4. En ce qui concerne les parois latérales transversales, cette partie faisant saillie vers l'intérieur est dotée plus près du fond 4, d'un autre gradin 12. Dans la partie située le plus vers l'intérieur et se raccordant au fond 4 de ces dernières parties de paroi précitées, on a en outre pratiqué des fentes 13 qui sont disposées de telle sorte qu'elles déterminent deux rectangles. Ces fentes 13 assurent que l'on puisse aisément chasser par pression des parties des parois latérales transversales à partir des parties de paroi latérale internes 6 précitées, de telle sorte que soient formées des ouvertures pour l'introduction des conducteurs électriques. Sur le gradin 12 précité des parties de paroi internes 6 des parois latérales transversales 5 se situent cependant encore des prolongements en forme de dents 14 qui s'étendent parallèlement aux parties situées plus vers l'extérieur et donc plus loin du fond 4 de ces parties de paroi 6. Sur ces prolongements 14 peuvent par exemple être glissés en place des composants électriques appropriés, comme par exemple des pièces de dérivation pour les fils de mise à la terre.

Aux quatre coins, les parties de paroi 6 des parois latérales longitudinales 5 et les parties de paroi 6 des parois latérales transversales 5 du bac 1 se raccordent entre elles entre le gradin 11 et le fond 4, grâce à une paroi de biseau de coin 15 faisant saillie vers l'intérieur, qui est délimitée sur le côté opposé au fond 4, par un plan qui s'étend parallèlement à ce fond 4. Sur le côté opposé au fond 4 de la paroi 15, les parties de paroi 6 précitées se raccordent dans les coins pratiquement suivant des angles droits entre elles, mais à ces coins se raccorde un gradin 16 faisant saillie vers l'intérieur. Sur les côtés opposés au fond 4, les gradins 16 sont délimités par des surfaces s'étendant parallèlement au fond 4 et qui sont situées à une certaine distance des bords libres éloignés du fond 4 des parties de paroi internes 6.

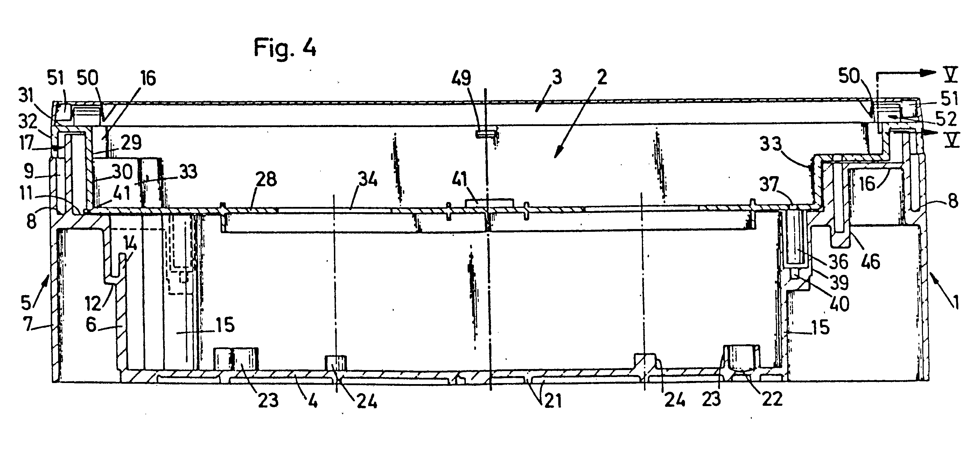

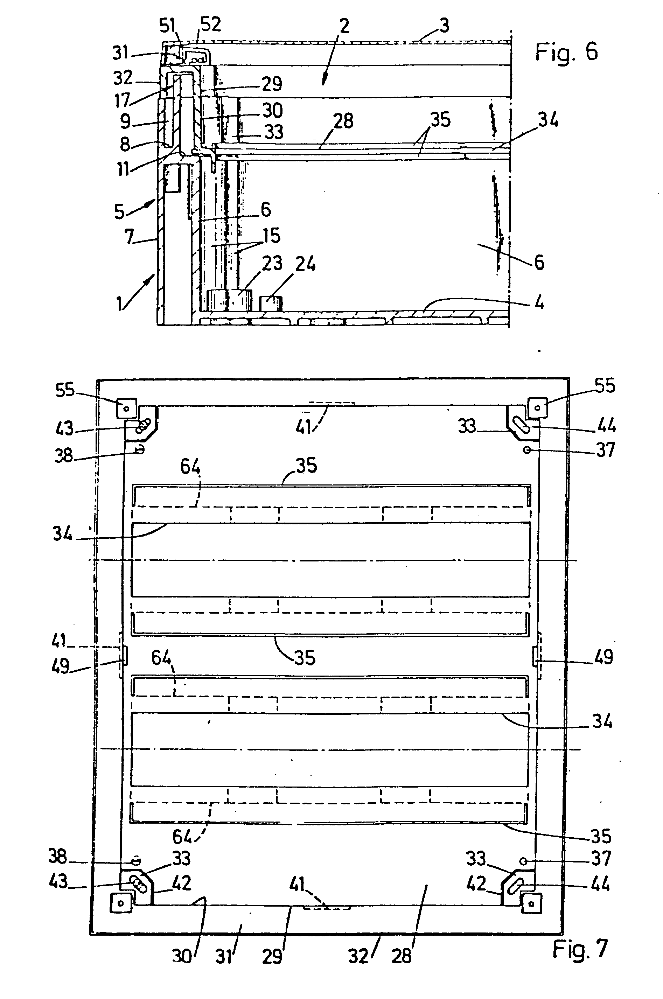

Ces parties de paroi internes 6 s'étendent cependant par leurs bords libres un peu plus loin du fond 4 que les bords libres des parties de paroi externes 7. De la sorte, la partie de paroi interne 6 des quatre parois latérales 5 forme une partie décalée vers l'intérieur par rapport à la partie de paroi externe 7 et faisant saillie au-delà du bord externe libre de cette partie de paroi externe 7. Cette partie décalée est désignée aux figures 4, 6 et 8 par la référence 17. Cette partie 17 fait saillie sur approximativement 1 cm en dehors des parties de paroi externes 7 et se situe à une distance d'environ 8 mm du côté interne de ces parties de paroi externes 7.

Comme déjà mentionné précédemment, la liaison entre les parties de paroi internes 6 et les parties de paroi externes 7 est établie grâce à des rubans 8, 9 et 10. Le ruban 8 s'étend parallèlement au fond 4 dans le prolongement du gradin 11 des parties de paroi internes. Ce ruban ou nervure 8 s'étend sur toute la périphérie entre les deux encadrements formés respectivement par les parties de paroi 6 et les parties de paroi 7, mais il est interrompu localement par deux ouvertures 18 dans chacune des parois latérales longitudinales 5 du bac 1. Ces ouvertures 18 servent à la mise en place d'un crochet de butée. Les crochets de butée sont formés de telle sorte qu'ils puissent être enfilés par une branche toujours jusqu'à la même distance à travers l'ouverture 18 et être verrouillés dans cette ouverture. Dans cette position, le bac 1 se trouve à la profondeur désirée dans l'ouverture d'un mur lorsque l'autre branche du crochet, qui est dirigée vers l'extérieur, vient rencontrer la face frontale du mur sur le côté opposé au fond 4. A l'aide de ces crochets, on peut donc placer le bac 1 à la profondeur désirée et en même temps le fixer temporairement, par exemple en fixant au moyen de clous la dernière branche précitée des crochets sur le mur. Les crochets peuvent aussi, par exemple lors d'un semi-encastrement, être enfilés de l'arrière par une branche dans une ouverture 18. L'autre branche fait alors saillie latéralement en dehors du bac 1 et forme un prolongement qui assure une meilleure fixation du bac dans l'ouverture. Aux quatre coins, l'encadrement formé par les parties de paroi externes 7 et celui formé par les parties de paroi internes 6 sont encore reliées entre eux par un ruban ou vervure 9 qui est dirigée perpendiculairement au fond et s'étend à partir du ruban 8 jusqu'au bord le plus éloigné du fond 4 des parties de paroi externes 7. Sur l'autre côté du ruban 8, donc entre celui-ci et le fond 4, la liaison entre les parties de paroi 6 et 7 est réalisée par des rubans ou nervures 10 dirigées perpendiculairement au fond 4. Ces rubans 10 sont situés de telle sorte qu'ils se raccordent aux parois de biseau de coin 15 de l'encadrement formé par les parties de paroi interne 6 et en fait de telle sorte que quatre de ces rubans 10 se raccordent aux parties de paroi externes 7 faisant partie des parois latérales transversales 5 mais qu'aucun ruban 10 ne se raccorde aux parties de paroi 7 qui font partie des parois latérales longitudinales 5.

De la sorte, on obtient en tout cas sur le côté dirigé vers le fond 4 du ruban 8, des zones de parties de paroi externes 7 qui peuvent assez bien être déformés élastiquement. Lorsque le bac 1 est fixé dans une ouverture, une telle déformation, par exemple sous la pression du matériau de remplissage qui est chassé entre le bac 1 et la paroi de l'ouverture, rendra la fixation du bac 1 dans cette même ouverture plus robuste. Cette déformation élastique des parties de paroi externes 7 n'est en aucune façon visible sur le côté interne du bac 1. Si même les parties de paroi externes 7 venaient à se briser ou à être endommagées, rien n'en sera remarqué sur le côté interne du bac 1. Les parties du paroi internes 6 restent intactes et non déformées.

Dans les deux parties de paroi externes 7 qui font partie des parois latérales transversales 5 du bac 1, on a encore pratiqué, entre le ruban 8 et le bord du côté du fond 4, deux rainures 19 s'étendant sur le côté extérieur suivant la direction longitudinale de ces parties de paroi. Sur le côté interne, on a pratiqué des rainures 20 s'étendant entre l'une de ces rainures et le bord extrême dans le sens transversal de la partie de paroi 7. Toutes ces rainures forment des zones d'affaiblissement qui permettent de chasser aisément des sections des parties de paroi externes 7 pour obtenir donc des ouvertures bien formées pour amener à l'intérieur les conducteurs électriques. Ces zones d'affaiblissement formées par les rainures 19 et 20 sont en fait situées exactement en face des fentes 18 précitées dans les parties de paroi internes 6. Dans une seule et même paroi latérale transversale 5, on peut donc obtenir des ouvertures pour les conducteurs électriques situées exactement en face l'une de l'autre, en enfonçant une partie de la partie de paroi interne 6 et une partie de la partie de paroi externe 7.

Sauf lorsque le coffret et les conducteurs électriques sont encastrés dans un mur en béton, on ne chasse les sections précitées des parties de paroi internes 6 que lors de la mise en place du câblage dans les tubes. Ce câblage n'est en général effectué que quand le gros oeuvre est terminé. Entre-temps, les tubes que l'on met en place lors de l'encastrement du bac 1, pénètrent uniquement dans des ouvertures formées en chassant des sections des parties de paroi externes 7. Ils reposent par une extrémité contre les parties de paroi internes 6 encore fermées. Les extrémités des tubes situées du côté du bac 1 ne doivent donc pas être obturées spécialement avec le bac suivant l'invention. Ce sont les parties de paroi 6 qui assurent cette obturation.

La face dorsale du fond 4 est dotée de nervures 21, de telle sorte qu'éventuellement

un plâtrage adhèrera convenablement à ce fond. Lorsque par exemple le bac 1 est monté dans un mur très mince, il peut arriver que le fond 4 se situe exactement dans le côté arrière de ce mur. Lorsque ce côté arrière doit être plâtré, on plâtre conjointement le fond 4, de telle sorte que le bac 1 devient invisible sur sa face arrière.

Le fond 4 est encore doté de quatre zones d'affaiblissement allongées 22, qui sont entourées par des nervures 23. Ces zones d'affaiblissement 22 peuvent être aisément chassées de telle sorte qu'on obtienne ainsi des fentes allongées. Ces zones d'affaiblissement 22 s'étendent sous un angle de 45° par rapport à la face interne des parois latérales 5 et sont dirigées l'une vers l'autre vers l'extérieur. Lorsque l'on ne fixe pas le bac 1 au moyen de crochets d'arrêt, on peut enfiler des vis à travers les rainures formées en chassant les zones d'affaiblissement 22. Etant donné que les rainures ainsi obtenues sont allongées et présentent l'inclinaison définie précédemment, on peut encore légèrement incliner le bac 1 lorsque les vis sont vissées partiellement mais pas serrées à fond.

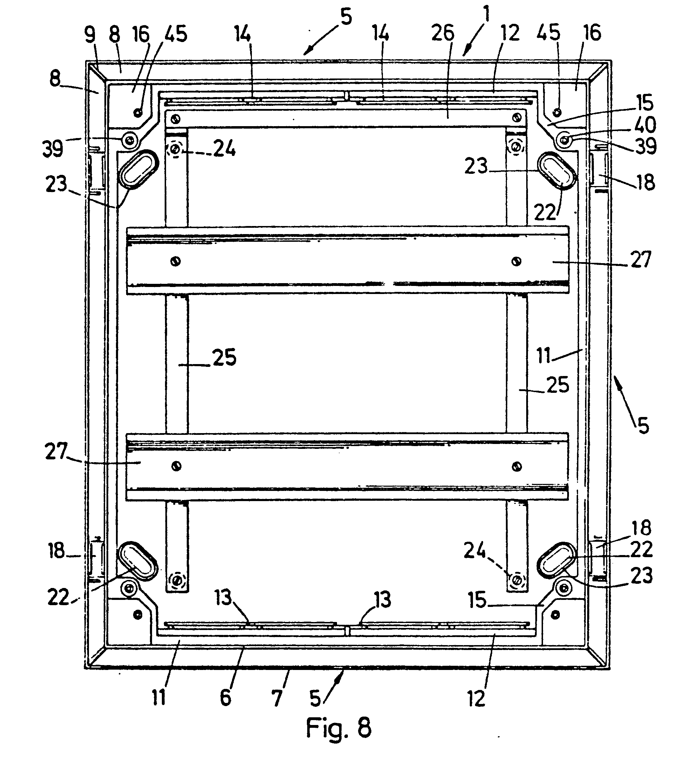

Sur la face interne du fond 4 se situent des prolongements 24 pour la fixation de supports de composants électriques. Ces supports n'ont été représentés qu'à la figure 8 et sont constitués par deux lattes métalliques 25 qui s'étendent suivant la direction longitudinale du fond 4, une latte métallique 26 qui relie entre elles les lattes 25 à une extrémité et des rails de support métalliques 27 en forme de gouttières qui s'étendent suivant la direction transversale du fond et sont fixés aux lattes 25. La forme des rails de support 27 est telle que des composants électriques tels que des fusibles, des disjoncteurs automatiques, des commutateurs, etc. peuvent être encliquetés par une pièce de fixation appropriée sur ces rails de support 27. Le dispositif de support ainsi obtenu pour le matériel électrique n'appartient pas en fait au coffret proprement dit, mais celui-ci est en général mis en vente avec ce dispositif de support monté sur le fond 4 du bac 1. Suivant les besoins, on peut évidemment monter sur le fond du bac 1, un, deux ou plus de deux rails 27 et ceci en fonction de la dimension du bac 1 et du matériel électrique à mettre en place. Les rails de support 27 peuvent être fixés directement au fond 4 dans certains cas.

Le cadre intermédiaire 2 forme une cuvette et est constitué par un fond 28 ayant la forme d'un rectangle dont les coins sont biseautés et par quatre parois latérales 29 dont les bords extrêmes sont rabattus. En fait, les parois latérales 29 sont constituées par une branche interne 30 qui est dirigée perpendiculairement au fond 28 mais forme dans les quatre coins du cadre intermédiaire 2 un gradin 33 faisant saillie vers l'intérieur, par une branche 31 se raccordant à la branche 30 et s'étendant vers l'extérieur parallèlement au fond 28, et par une branche 32 se raccordant à la branche 31 mais s'étendant du côté du fond 28 perpendiculairement à ce dernier. Les branches 32 des quatre parois latérales 29 forment conjointement un encadrement rectangulaire dont les dimensions sont exactement égales à celles du bord libre de l'encadrement formé par les parties de paroi externes 7 des quatre parois latérales 5. Les branches 30 des parois latérales 29 forment un encadrement qui s'adapte à l'intérieur de l'ouverture de bac 1. L'encadrement formé par les branches 30 peut être placé dans l'encadrement formé par les parties décalées 17, les gradins 33 dans les coins du cadre intermédiaire 2 s'adaptant alors exactement sur les gradins 16 précités dans les quatre coins du bac 1. Lors que le cadre intermédiaire 2 se raccorde complètement contre le bac 1, le fond 28 du cadre intermédiaire 2 se trouve dans ces coins, autour des gradins 16 précités, contre la face opposée au fond 4 des parois de biseau de coin 15 du bac 1. Les parois latérales 29 entourent la partie décalée 17 des parois 5, les branches 31 de ces parois latérales 29 se situant en face de la partie extrême des parties décalées 17 et les parois latérales 29 se situant par leurs branches 32 exactement dans le prolongement des parties de paroi externe 7 des parois latérales 5. En d'autres mots, dans cette position qui est en fait illustrée aux figures, le cadre intermédiaire 2 forme en quelque sorte le prolongement du bac 1, tandis que de cadre intermédiaire 2 ne fait ni saillie ni retrait par rapport au bac 1. Le cadre intermédiaire 2 est monté dans cette position chaque fois que le coffret n'est pas complètement encastré dans le mur et donc que le bac 1 est monté soit sur le mur, soit à moitié dans celui-ci et à moitié hors de celui-ci. Dans cette position, l'écartement entre le fond 28 et le fond 4 est exactement l'écartement désiré qui est toujours le même selon l'usage. Cet écartement dépend des dimensions des composants électriques. En fait, c'est l'écartement entre la face supérieure des rails de support 27 et le fond 28 qui est important. Cette face supérieure se situe cependant toujours à la même distance du fond 4. Le fond 28 obture pratiquement complètement le bac 1, à l'exception de fenêtres 34. Ces dernières servent à pouvoir actionner les composants électriques ou à remplacer des parties de ceux-ci. Si les composants sont des fusibles, on doit par exemple pouvoir retirer le fusible proprement dit de son socle sans retirer le cadre intermédiaire 2. Si les composants sont des disjoncteurs automatiques ou des commutateurs, le bouton d'actionnement doit alors pouvoir être manipulé à travers la fenêtre. Le nombre des fenêtres 34 est égal à celui des rails de support 27 et en face de chaque rail de support se trouve donc une telle fenêtre 34. Cette fenêtre 34 s'étend donc suivant la direction en largeur du fond 28 pratiquement sur toute cette largeur. Le fond 28 possède autour des fenêtres 34, de petites nervures de renforcement 35. De chaque côté de chaque fenêtre 34 s'étendent, dans le côté dirigé vers le fond 4 du fond 28, de petites rainures de rupture 64. Grâce à ces petites rainures 64, de part et d'autre d'une fenêtre 34, cette dernière peut être élargie aisément complètement ou partiellement, en chassant par pression des parties du fond 28. Ceci peut être important par exemple lorsque des disjoncteurs automatiques ou fusibles dits minces sont situés sur les socles montés sur les rails de support 27. Ces disjoncteurs ou fusibles minces sont situés pour la plus grande partie sur le côté du fond 28 opposé au fond 4 et ne peuvent pas traverser une fenêtre 34 normale. En augmentant la dimension de cette fenêtre 34, on peut alors retirer le cadre intermédiaire 2 du bac 1, lorsque ceci est nécessaire, sans devoir séparer les disjoncteurs ou fusibles minces de leur socle.

Afin de faciliter la mise en place dans la position correcte sur le bac 1 du cadre intermédiaire 2, sur le fond 28 de ce dernier, du côté dirigé vers le fond 4 du bac 1, sont situés quatre doigts 36, à savoir un au voisinage de chaque coin. Ces doigts 36 s'étendent quelque peu de façon conique vers leur extrémité libre et ils sont en fait formés par de petits tubes creux. L'ouverture de chacun des ces petits tubes débouche sur une ouverture 37 dans le fond 28 que traverse une vis 38. Dans un but de clarté, on n'a représenté que deux des quatre vis aux figures. Les quatre doigts 36 aux quatre coins du cadre intermédiaire 2 s'adaptent exactement dans des pots correspondants 39 formés dans la partie située à côté du gradin 16 et s'étendant parallèlement au fond 4 des parois de biseau de coin 15. Les vis 38 qui pénètrent dans les quatre doigts 36, sont vissées par leur extrémité dans le fond des pots 39, fond qui peut être doté d'une ouverture prépercée 40 pour ces vis.

Lorsque le coffret est monté de façon apparente, le cadre intermédiaire 2 se raccorde complètement contre le bac 1. Ce cadre intermédiaire 2 est fixé exclusivement par les vis 38 et donc à l'aide de son fond 28 à ce bac 1.

Lorsque l'on encastre cependant le bac 1 dans une ouverture pratiquée dans un mur, le revêtement de ce dernier, par exemple le plâtrage, doit alors se raccorder, comme déjà mentionné précédemment, aux parties décalées. Dans ce cas, le cadre intermédiaire 2 ne peut plus se raccorder complètement au bac 1. Une partie du revêtement mural se situe entre le borde libre de la partie de paroi externe 7 et le cadre intermédiaire 2. Dans ce cas, l'écartement entre le fond 28 et le fond 4 ou la face supérieure des rails de support 27 ne serait plus l'écartement courant. Pour éviter ceci, le fond 28 peut être séparé du reste du cadre intermédiaire 2, c'est-à-dire des parois latérales 29. Cette séparation peut se faire par découpage avec un couteau. Afin de faciliter ce découpage, le raccordement de la branche 30 des parois latérales 29 avec le fond 28 est affaibli et plus précisément est rendu plus mince que le reste du cadre intermédiaire 2. En outre, à mi-distance sur chaque paroi latérale 29, à l'endroit où sa branche 30 se raccorde au fond 28, on a pratiqué une fente 41. Un couteau peut être enfoncé à travers chacune de ces fentes 41. Etant donné que le découpage dans les coins autour du gradin 33 serait difficile, on a pratiqué dans le fond 28, immédiatement en face de ces gradins 33, également une fente 42. Lorsque le fond 28 et les parois latérales 29 sont séparées, ce fond 28 est vissé comme décrit précédemment au moyen de quatre vis 38, contre les parties des parois de biseau de coin 15 s'étendant parallèlement au fond 4. Le fond 28 se situe donc à la distance désirée du fond 4 et, à cause des doigts 36, également dans la position correcte. L'encadrement formé par les parois latérales 29 est fixé séparément, au moyen de quatre vis 43, au bac 1. Dans un but de clarté, on n'a représenté que deux des quatre vis 43 aux figures. Ces vis 43 traversent des fentes 44 dans les gradins 33 du cadre intermédiaire 2 et sont vissées dans la partie faisant face et s'étendant parallèlement au fond 4 d'un gradin 16 du bac 1. Dans chacun des quatre gradins 16 est prépercée dans ce but une petite ouverture 45, qui débouche sur le côté interne d'un pot 46 qui se raccorde à la dernière partie précitée du gradin 16, sur le côté où est situé le fond 4. Les quatre fentes 44 qui sont pratiquées dans les quatre gradins 33 du cadre intermédiaire 2 s'étendent par leur direction longitudinale sous un angle de 45° par rapport à la périphérie externe des parois latérales 29 et convergent à partir du milieu du cadre intermédiaire 2. Etant donné que les fentes 44 sont allongées et dirigées en oblique dans le sens défini précédemment, l'encadrement formé par les parois latérales 29 du cadre intermédiaire 2 peut être incliné quelque peu par rapport au bac 1, auquel est fixé le fond séparé 28 de ce cadre intermédiaire 2, même lorsque les vis 43 sont déjà partiellement vissées dans les gradins 16 du bac 1. Ceci est très important étant donné qu'il arrive fréquemment que lors de l'encastrement du bac 1, celui-ci se situe en oblique dans le trou pratiqué dans le mur et que les parois latérales 5 s'étendant du bas vers le haut ne soient plus parfaitement verticales. Même dans de tels cas, on peut placer cependant l'encadrement formé par les parois latérales 29 du cadre intermédiaire 2 de telle sorte qu'il soit convenablement dressé. On visse d'abord les vis 43 traversant les fentes 44 du cadre intermédiaire 2 dans les ouvertures 45, on place l'encadrement formé par les parois latérales 29 à la position désirée, les vis 43 se vissant alors dans les fentes 44, et on serre ensuite ces vis 43. La partie visible de l'extérieur du cadre intermédiaire 2 et le couvercle 3 qui y est monté peuvent donc toujours être fixés à la position désirée sur le bac 1, même lorsque ce dernier est disposé un peu en oblique ou de travers. La fermeture du bac 1 par le fond 28 du cadre intermédiaire 2 ne subit alors aucune influence, étant donné que ce fond est séparé des parois latérales 29 et est fixé indépendamment sur le bac 1.

Le couvercle 3 a la forme d'un plateau rectangulaire légèrement incurvé dans le sens transversal et dont les bords sont rabattus. Un bord rabattu longitudinal est doté d'un renfoncement 47. La partie située le plus à l'intérieur de ce renfoncement 47 forme une languette quelque peu élastique en saillie 48 avec une extrémité offrant une surépaisseur. Avec cette extrémité, la languette 48 peut s'accrocher élastiquement derrière une petite nervure 49 qui est située sur une paroi longitudinale 29 du cadre intermédiaire 2. Etant donné que le couvercle doit pouvoir être fixé aussi bien sur la paroi latérale longitudinale 29 de gauche que sur celle ce droite du cadre intermédiaire 2, sur chacune des parois latérales longitudinales 29 est située, en fait sur le côté dirigé vers le fond 28 de la branche 30, une telle petite nervure 49. Le bord longitudinal rabattu du couvercle 3, qui est situé en face du renfoncement 47, est doté au voisinage de chaque extrémité d'une interruption. A l'endroit de cette interruption est monté entre deux saillies 51, un petit axe 50 s'étendant parallèlement au bord longitudinal rabattu. Ce petit axe 50 fait partie d'une petite charnière 52 à l'aide de laquelle le couvercle 3 est relié à une paroi latérale longitudinale 29 du cadre intermédiaire 2. Aussi bien le petit axe 50 que le reste de la petite charnière 52 sont faits de matière synthétique. Le reste de la charnière 52 est constitué par un étrier en forme de U dont l'ouverture est dirigée vers le côté extérieur du coffret et dont une branche forme un cylindre que traverse le petit axe 50 et dont l'autre branche est fixée au moyen d'une petite vis 53 au cadre intermédiaire 2. Pour permettre le vissage de la vis 53, la branche de l'étrier qui se raccorde à l'extrémité formant un cylindre présente une petite ouverture 54. Dans les quatre coins du côté dirigé du côté opposé au fond 28 de l'encadrement formé par les parois latérales 29 est pratiquée une petite ouverture 55 pour le vissage des vis 53. Les deux vis 53 qui fixent les deux charnières 52 peuvent donc être montées aussi bien sur un côté longitudinal que sur l'autre du cadre intermédiaire 2. Il est même possible de fabriquer le couvercle 3 de telle sorte que les petites charnières se situent le long d'un côté court de ce couvercle 3, de telle sorte qu'un tel couvercle puisse être fixé aussi bien sur un côté court que l'autre du cadre intermédiaire 2. L'écartement entre un axe 50 et la face extérieure du bord du couvercle 3, du côté des charnières 52, est supérieur à celui entre cet axe et la branche 31 du cadre intermédiaire 2 en position de fermeture du couvercle 3. Lorsque le couvercle 3 est complètement ouvert ou complètement fermé, ce petit axe 50 se situe au plus près du cadre intermédiaire 2. Lorsque l'on fait pivoter le couvercle d'une position vers l'autre, la branche de l'étrier qui se situe par une extrémité autour de l'axe 50 sera légèrement soulevée par le couvercle lui-même du cadre intermédiaire 2. L'étrier est également fabriqué de telle sorte qu'il s'oppose à ce soulèvement, cet étrier pouvant cependant être déformé élastiquement. Il ressort de ce qui précède que les petites charnières 52 elles-mêmes attirent le couvercle 3 élastiquement vers la position de fermeture lorsque celui-ci fait un angle inférieur à 90° avec le face frontale du cadre intermédiaire 2. Les charnières 52 permettent cependant un pivotement sur 180° du couvercle 3 par rapport au cadre intermédiaire 2. Lors de ce pivotement, le bord du couvercle 3 qui est fixé à charnière au cadre intermédiaire 2, ne fait jamais saillie en dehors de ce cadre intermédiaire, ce qui est important dans certains cas pour permettre la mise en place du coffret, par exemple pour situer deux coffrets l'un à côté de l'autre et l'un contre l'autre, avec leurs couvercles tournant l'un vers l'autre pour être ouverts.

Le coffret décrit précédemment est donc destiné aussi bien à un montage encastré qu'à un montage apparent. Lors d'un montage apparent, le cadre intermédiaire 2 est fixé de manière à se raccorder au bac 1 et le coffret forme un bloc attrayant. Lors de l'encastrement, le bac 1 est monté dans le mur, il est ensuite fermé par le fond 28 du cadre intermédiaire 2 et le reste de ce dernier est alors mis en place après la finition du mur, le cadre intermédiaire 2 formant alors un chevauchement du raccordement du revêtement mural avec le bac 1. L'épaisseur du revêtement, qui s'étend jusque contre la partie décalée 17 des parties de paroi internes 6, peut alors varier dans certaines limites. Le cadre intermédiaire 2 avec le couvercle peut toujours être amené à la position correcte même lorsque le bac 1 est monté de travers dans le mur.

Ce coffret convient également plus particulièrement pour être incorporé directement par coulée lors de la fabrication de murs en béton. La grande pression qui apparaît lors de la vibration du béton sur les parois du bac 1 a simplement pour conséquence que les parties de paroi extérieures 7 seront déformées. Les parties de paroi internes 6 restent cependant non déformées. A cause de la vibration, les tubes à travers lesquels passent les fils électriques doivent s'étendre jusqu'à l'intérieur du bac 1. Ceci a lieu par l'intermédiaire d'ouvertures que l'on pratique par pression dans les parties de paroi externes et internes 6 et 7. Ces ouvertures se faisant face dans les parties de paroi 6 et 7 sont d'abord obturées complètement par un morceau de mousse synthétique cellulaire de forme et de densité appropriées qui est pincé, en face des ouvertures, entre les parties de paroi 6 et 7. On enfile alors les tubes à travers ce morceau de matière synthétique cellulaire qui a d'abord été doté des ouvertures nécessaires pour les tubes. Ces tubes sont ainsi immobilisés et du béton ne peut pas pénétrer dans le bac 1. Dans les coffrets connus, on doit utiliser pour l'incorporation dans des murs en béton, des types spéciaux de coffrets qui ne convenaient pas pour un montage encastré ou apparent dans des murs existants. Dans d'autres cas, on a dû utiliser un encadrement métallique dans lequel on place le coffret.

Il doit être entendu que la présente invention n'est en aucune façon limitée aux formes de réalisation décrites ci-avant et que bien des modifications peuvent y être apportées notamment quant à la forme, à la composition, à la disposition et au nombre des éléments intervenant dans sa réalisation sans sortir du cadre de la présente demande de brevet.

En particulier, le coffret ne doit pas nécessairement être fait de matière synthétique.

Les zones d'affaiblissement entre le fond et les parois latérales du cadre intermédiaire ne doivent pas nécessairement être formées par un raccordement plus mince et par des fentes. Les zones d'affaiblissement peuvent aussi être constituées par des perforations. Le fond peut d'ailleurs être séparé des parois latérales d'une autre manière que par découpage, par exemple par une expulsion par pression.

Dans le fond du bac peuvent aussi être prévues des ouvertures supplémentaires ou des parties pouvant être chassées par pression, afin de fixer par exemple le bac temporairement ou définitivement.

**Revendications**

1. Coffret pour matériel électrique, comportant un bac rectangulaire (1) ouvert sur un côté, constitué par un fond (4) et des parois latérales (5) formant un tout, un cadre intermédiaire quadrangulaire (2) s'adaptant sur le côté ouvert di bac (1) en obturant partiellement l'ouverture de ce bac (1), et un couvercle (3) qui est monté à charnière sur le cadre intermédiaire (2), caractérisé en ce que les parois latérales (5) du bac (1) comportent sur toute la périphérie du bac (1), du côté ouvert de celui-ci, une partie (17) décalée vers l'intérieur par rapport à la face externe des parois (5), faisant saillie au-delà du bord externe libre des parois (5) dans une direction s'éloignant du fond (4) sur une distance d'au moins environ 1 cm et formant une pièce avec les parois (5), le cadre intermédiaire (2) couvrant cette partie (17) sans faire saillie en dehors de la face externe des parois latérales (5) et avec ses faces externes dans la continuation des parois latérales (5) du bac, le bord libre du cadre intermédiaire (2) pouvant toucher le bord externe libre des parois (5) en cas de montage apparent du coffret.

2. Coffret suivant la revendication précédente, caractérisé en ce que les parois latérales (5) du bac (1) sont doubles du côté ouvert du bac, la partie de paroi externe (7) constituant une partie de la face extérieure des parois latérales et la partie de paroi interne (6) formant la partie décalée (17) précitée.

3. Coffret suivant la revendication précédente, caractérisé en ce que les parois latérales (5) du bac (1) sont complètement réalisées sous forme double.

4. Coffret suivant la revendication précédente, caractérisé en ce que les parties de paroi interne (6) et externe (7) de chaque paroi latérale (5) sont reliées entre elles au moins par un ruban de liaison (8) s'étendant parallèlement au fond (4), le ruban d'au moins deux parois opposées (5) étant doté d'une ouverture (18) pour la mise en place d'un crochet d'arrêt s'y adaptant.

5. Coffret suivant l'une quelconque des revendications précédentes, caractérisé en ce que le cadre intermédiaire (2) forme une cuvette comportant un fond (28) doté de fenêtres (34) et des parois latérales (29) dont les bords libres (31, 32) sont rabattus vers l'extérieur de manière à pouvoir entourer la partie décalée (17) des parois latérales (5) du bac (1), le fond (28) pouvant être séparé de l'encadrement formé par les parois latérales (29), des moyens (15, 16, 33) étant prévus pour permettre la fixation séparée du fond (28) et de l'encadrement (29).

6. Coffret selon la revendication précédente, caractérisé en ce que les moyens destinés à permettre la fixation séparée du fond (28) et de l'encadrement formé par les parois latérales (29) du cadre intermédiaire (2) comprennent dans chaque coin du bac (1) deux parties (15 et 16) faisant saillie à l'intérieur du bac, une des parties (15) formant un support pour le fond (28), l'autre partie (16) située plus à l'extérieur du bac (1) et plus loin du fond (4) du bac (1), permettant la fixation de l'encadrement (29) du cadre intermédiaire (2), cet encadrement (29) étant également pourvu dans ses quatre coins de parties (33) en saillie vers l'intérieur, aussi bien le fond (28) que ces parties en saillie (33) de l'encadrement (29) étant pourvus d'ouvertures (37 et 44) pour des vis de fixation (38, 43) destinées à être vissées dans ou à travers lesdites parties en saillie correspondantes (15 ou 16).

7. Coffret selon la revendication précédente, caractérisé en ce que les ouvertures (44) formées dans les parties (33) en saillie vers l'intérieur de l'encadrement du cadre intermédiaire (2) sont des fentes s'étendant en oblique par rapport aux parois latérales (29) de l'encadrement.

8. Coffret selon l'une quelconque des revendications précédentes, caractérisé en ce que le couvercle (3) est relié au cadre intermédiaire (2) par au moins deux charnières (52), ces charnières (52) étant des étriers en forme de U dont l'ouverture est dirigée vers l'extérieur, une branche de ces étriers étant fixée au cadre (2) et l'autre branche étant fixée à pivotement au couvercle (3).

9. Coffret suivant la revendication précédente, caractérisé en ce que l'axe de pivotement géométrique suivant lequel une branche de l'étrier d'une charnière (52) est fixée au couvercle (3) se situe à une distance du bord latérale extrême situé du côté des charnières, du couvercle, qui est supérieure à l'écartement entre cet axe de pivotement géométrique et le côté du cadre intermédiaire (2) situé du côté du couvercle (3), tandis que les branches des étriers peuvent être légèrement écartées élastiquement l'une de l'autre par le bord latéral du couvercle (3), lors de la rotation de ce dernier.

## Claims

1. Casing for electrical equipment, comprising a rectangular trough (1) open on one side, comprised of a bottom (4) and side walls (5) forming an unit, a quadrangular intermediate frame (2) fitting over the open side of the trough (1) by partly closing the opening of said trough (1), and a cover (3) which is hingedly mounted on the intermediate frame (2), characterized in that the side walls (5) of the trough (1) comprise over the whole circumference of the trough (1), on the open side thereof, a portion (17) staggered inwards relative to the outer surface of the walls (5), projecting beyond the free outer edge of the walls (5) along a direction away from the bottom (4) over a distance of at least about 1 cm and forming an unit with the walls (5), the intermediate frame (2) covering this portion (17) without projecting outside the outer surface of the side walls (5) and with the outer surfaces thereof lying in the extension of the trough side walls (5), the free edge of the intermediate frame (2) being engageable with the free outer edge of the walls (5) in the case of a surface-mounting of the casing.

2. Casing according to the preceding claim, characterized in that the side walls (5) of the trough (1) are double on the trough open side, the outer wall portion (7) forming part of the outer surface of the side walls, and the inner wall portion (6) forming said staggered portion.

3. Casing according to the preceding claim, characterized in that the side walls (5) of the trough (1) are completely made double.

4. Casing according to the preceding claim, characterized in that the inner (6) and outer (7) wall portions of each side wall (5) are connected together by at least one connecting strip (8) extending in parallel relationship with the bottom (4), the strip of at least two opposite walls (5) being provided with an opening (18) for receiving a catch hook fitting therein.

5. Casing according to any one of the preceding claims, characterized in that the intermediate frame (2) forms a tray comprising a bottom (28) provided with ports (34) and side walls (29) the free edges of which (31, 32) are turned outwards so as to be able to surround the staggered portion (17) of the side walls (5) of the trough (1), the bottom (28) being removable from the framing formed by the side walls (29), means (15, 16, 33) being provided to allow securing separately the bottom (28) and the framing (29).

6. Casing according to the preceding claim, characterized in that the means allowing to secure separately the bottom (28) and the framing formed by the side walls (29) of the intermediate frame (2), comprise in each corner of the trough (1), two portions (15 and 16) projecting inside the trough, the one portion (15) forming a support for the bottom (28), the other portion (16) lying more on the outside of the trough (1) and farther away from the bottom (4) of the trough (1), allowing to secure the framing (29) of the intermediate frame (2), said framing (29) also being provided in the four corners thereof with portions (33) projecting inwardly, the bottom (28) as well as said projecting portions (33) of the framing (29) being provided with openings (37 and 44) for fastening screws (38, 43) to be screwed into or through said corresponding projecting portions (15 or 16).

7. Casing according to the preceding claim, characterized in that the openings (44) formed in the inwardly-projecting portions (33) of the framing of the intermediate frame (2), are slots extending at an angle relative to the side walls (29) of the framing.

8. Casing according to any one of the preceding claims, characterized in that the cover (3) is connected to the intermediate frame (2) by at least two hinges (52), said hinges (52) being U-shaped clamps the opening of which faces outwards, the one leg of said clamps being secured to the frame (2) and the other leg being swingably secured to the cover (3).

9. Casing according to the preceding claim, characterized in that the geometric swing axis about which one clamp leg of a hinge (52) is secured to the cover (3), lies at a distance from the sidemost edge lying on the hinge side, of the cover, which is longer than the spacing between said geometric swing axis and the side of the intermediate frame (2) lying on the cover (3) side, while the clamp legs may be slightly spread resiliently from one another by the side edge of the cover (3), during the rotation of this latter one.

## Patentansprüche

1. Kasten für elektrische Geräte in der Form eines rechteckigen, einseitig offenen Kastens (1), bestehend aus einem zusammen mit Seitenwänden (5) ein Ganzes bildenden Boden (4), sowie aus einem an der offenen Seite des Kastens (1) angepassten, die Öffnung desselben teilweise verschliessenden quadratischen Zwischenrahmens (2) und einem am Zwischenrahmen (2) angelenkten Deckel (3), dadurch gekennzeichnet, dass die Seitenwände (5) des Kastens (1) über dessen Gesamtumfang und an dessen offenen Seite einen nach innen in bezug auf die Aussenseite der Seitenwände (5) verschobenen, aus dem freien Aussenrand der Seitenwände (5) vom Boden (4) hinweg über einen Abstand von wenigstens etwa 1 cm herausragenden und ein Ganzes mit den Seitenwänden (5) bildenden Teil (17) aufweisen, wobei der Zwischenrahmen (2) diesen Teil (17) überdeckt ohne aus der Aussenseite der Seitenwände herauszuragen, so dass seine Aussenseiten in bezug auf die Seitenwände (5) des Kastens fluchten und sein freier Rand imstande ist den freien Innenrand derselben bei Sichtmontage des Kastens zu berühren.

2. Kasten gemäss dem vorhergehenden Anspruch, dadurch gekennzeichnet, dass die Seitenwände (5) des Kastens (1) an der offenen Seite desselben doppelwändig sind, wobei der Aussenwandteil (7) ein Teil der Aussenseite der Seitenwände ist und der Innenwandteil (6) den vorgenannten verschobenen Teil (17) bildet.

3. Kasten gemäss dem vorhergehenden Anspruch, dadurch gekennzeichnet, dass die Gesamtseitenwände (5) des Kastens doppelwändig ausgeführt sind.

4. Kasten gemäss dem vorhergehenden Anspruch, dadurch gekennzeichnet, dass der Innenwandteil (6) und der Aussenwandteil (7) sämtlicher Seitenwände (5) wenigstens mittels eines mit dem Boden (4) des Kastens (1) gleichlaufenden Verbindungsstreifens (8) miteinander verbunden sind, wobei der Streifen wenigstens zweier einander gegenüberstehenden Wände (5) eine Öffnung (18) für die Anordnung eines in ihr passenden Blockierhakens aufweist.

5. Kasten gemäss irgendeinem der vorhergehenden Ansprüche, dadurch gekennzeichnet, dass der vorgenannte Zwischenrahmen (2) schalenartig ausgebildet ist mit einem mehrere Öffnungen (34) aufweisenden Boden (28) und Seitenwänden (29), deren freie Ränder (31, 32) nach aussen umgeschlagen sind zwecks Umfassung des vorgenannten nach innen verschobenen Teiles (17) der Seitenränder (5) des Kastens (1), wobei dieser Boden (28) vom durch die Seitenwände (29) gebildeten Rahmen getrennt und entfernt werden kann, und Mittel (15, 16, 33) für die gesonderte Befestigung dieses Bodens (28) und dieses Rahmens (29) vorgesehen sind.

6. Kasten gemäss dem vorhergehenden Anspruch, dadurch gekennzeichnet, dass die Mittel für die gesonderte Befestigung des vorgenannten Bodens (28) und des vorgenannten durch die Seitenwände (29) des Zwischenrahmens (2) gebildeten Rahmens in jeder Ecke des Kastens (1) zwei nach innen hervorspringenden Teilen (15, 16) aufweisen, wovon der eine Teil (15) einen Träger für den Boden (28) bildet und der andere, weiter auswärts und ferner vom Boden (4) des Kastens (1) befindliche Teil (16) dient für die Befestigung des vorgenannten Rahmens (29) des Zwischenrahmens (2), wobei dieser Rahmen (29) in seinen vier Ecken ebenfalls mit nach innen hervorspringenden Teilen (33) versehen ist und der vorgenannte Boden (28) und die vorgenannten hervorspringenden Teile (33) des Rahmens (29) Öffnungen (37, 44) für in bzw. durch die entsprechenden hervorspringenden Teile (15, 16) zu schraubenden Befestigungsschrauben (38, 43) aufweisen.

7. Kasten gemäss dem vorhergehenden Anspruch, dadurch gekennzeichnet, dass die vorgenannten Öffnungen (44) der nach innen im Rahmen des Zwischenrahmens (2) hervorspringenden Teile (33) sich schräg in bezug auf die Seitenwände (29) des Rahmens erstreckende Spalten sind.

8. Kasten gemäss irgendeinem der vorhergehenden Ansprüche, dadurch gekennzeichnet, dass der vorgenannte Deckel (3) mit wenigstens zwei Gelenken (52) am Zwischenrahmen (2) angelenkt ist, wobei diese Gelenke (52) U-Bügel mit nach aussen gekehrter Öffnung sind und der eine Schenkel dieser Bügel am Zwischenrahmen (2) und der zweite Schenkel schwenkbar am Deckel (3) befestigt ist.

9. Kasten gemäss dem vorhergehenden Anspruch, dadurch gekennzeichnet, dass der Abstand zwischen der geometrischen Schwenkachse, gemäss der ein Schenkel eines Gelenkbügels (52) am Deckel (3) angelenkt ist, und dem an der Seite der Gelenke befindlichen äusseren Seitenrand des Deckels (3) grösser ist als der Abstand zwischen dieser geometrischen Schwenkachse und der an der Seite des Deckels (3) befindlichen Seite des Zwischen rahmens (2), während die Bügelschenkel sich durch den Seitenrand des Deckels (3) während der Schwenkbewegung desselben elastisch etwas spreizen lassen.

0 010 820

Fig. 1

Fig. 5

Fig. 2

1

Fig. 3

# Fig. 4

0010820

# 0 010 820

Fig. 6

Fig. 7

0 010 820

Fig. 8